# EUROPEAN PATENT APPLICATION

(11) **EP 3 117 906 A1**
(43) Date of publication of application: **18.01.2017**
(21) Application number: 15461560.3
(22) Date of filing: 21.09.2015
(51) Int. Cl.: B05B 15/12

(54) **SPRAY BOOTH WITH HEAT RECOVERY**

(30) Priority: 17.07.2015 PL 41314415
(71) Applicant: Zachodniopomorski Uniwersytet Technologiczny w Szczecinie, 70-310 Szczecin (PL)
(72) Inventor: Nikonczuk, Piotr, 71-112 Szczecin (PL); Zakrzewski, Boguslaw, 71-606 Szczecin (PL)
(74) Representative: Zawadzka, Renata

(57) **Abstract**

The spray booth ventilation system characterized in that it has a device for heat exchange comprising a module (24) with a compressor and an expansion valve, the compressor being connected with two heat exchangers: (2a) located in the supply duct (3) and (2b) located in the exhaust duct (4), and the expansion valve located between the heat exchangers (2a) and (2b) .

Preferably, the compressor is connected via electrovalves with a heat accumulator (5) which is equipped with two heat exchangers: bottom (6a) and upper (6b). Preferably, the heat accumulator (5) has a third heat exchanger (6c) connected through the flow pump (7) with the alternative heat source (8). The compressor can be connected via the electrovalves with the heat exchanger (9) transferring the heat to another use. Preferably, the spray booth has an installation for heat recovery (10) connected to the supply duct (3) and exhaust duct (4), wherein the heat exchanger (2b) is located in the exhaust duct (4) before and/or behind the heat recovery installation (10). Preferably, inside the module (24), the heat pump refrigerant circuit is a closed one, which is connected to the separate (glycol) circuit(s) of the different heat exchanger (2b) via the the evaporator and or the condenser, said separae circuits having the own flow pumps.

## Description

The object of the present invention is spray booth with the heat recovery

The common spray booths have three operating modes - the mode of painting (spraying), the heating mode (drying) and the ventilation mode. In the painting mode, the air in the cabin is constantly exchanged through the supply air duct and exhaust. The air is taken in through the open damper and pre-treated using coarse dust filter. Then, it is then heated by the burner to a temperature of 20 - 21 °C and blown into the painting chamber through the filter ceiling. The air contaminated with the overspray particles is extracted from the chamber by the floor duct after cleaning by the filter "paint stop" type. The average degree of filtration of the floor filter is around 93-97%. In the heating mode, the exhaust fan is switched off. The air in the cabin is recirculated. The air recirculation system in the painting cabin is performed by closing the first damper and opening the second one. The first damper is not closed completely, the degree of opening provides the free exchange of approximately 10% of the air which is recirculated. During the heating mode the air temperature is from 40 to 60°C. After completion of the heating mode, the cabin is ventilated to reduce the temperature inside the cabin, the structural elements of the cabin and the vehicle (or other painted parts). The air circulation is the same as in the spray mode. The difference between the modes of ventilation and the spray modes, is that during ventilation the air supply is not heated. In the European market there are spray booths offers with the devices used in ventilation systems enabling recovery of heat, so-called recuperators. They are built from the inlet duct, which is connected to the supply fan chamber. In its lower part the inlet duct is equipped with the damper which allows it to close and pre-filter, located at an inlet to the chamber outlet fan, which through a heat exchanger with burner is connected to supply duct via a ceiling filter warm air to the painting chamber. The Painting cabin is located on the floor, the floor filter through which air from the painting cabin is directed through the floor duct to the chamber exhaust fan and hence to exhaust duct. The device is equipped with cross - flow recuperator disposed so as in order to recover heat from the air discharged from the painting cabin in favor of fresh air drawn from outside to the spray booth.
The use of the standard recuperators in such a solution can lead to damage to the heat recovery units. As it was mentioned, the average degree of filtration of the floor filter is around 93-97%, so can be assumed that the amount of overspray particles after cleaning the air can be up to 10% of contaminants before filtration. Such a situation may gradually lead for sealing a recovery unit micro ducts overspray solid particles and there is no possibility of their simple cleaning. Contamination of the recuperator leads to the increase of air flow resistance, and causes a decrease in heat exchange efficiency. The method known from the Polish patent application P 323643 is the organization of air circulation in chambers painting and painting with airless spray or pneumatic manual consisting in the fact that the air in the room has favorable unidirectional flow, which is obtained by setting the exhaust holes on the entire surface of one of the walls of the parallelepipedic of the room whereas after opposite side of on the periphery of the inlet opening diffusers, jet complementary cavities air in the room are placed, they are directing jets perpendicular to the axis the entrance opening. In the room where under pressure two horizontal extraction zone exhaust air are separated, top supported by the exhaust upper zone and the lower zone is supported by the exhaust bottom, wherein both of the exhaust air occupy the full space of the baffle where they are installed. The air sucked through the upper exhaust is introduced into the atmosphere without the use of pollution reduction process, while the extracted air is directed to lower exhaust device to the installation utilization (reduction) solvent vapors. After passing through the heat recovery system (recuperation) on the diaphragm exchangers air to air type it is released by the emitter to the atmosphere. Thermal energy supplement the supply air in the zone of the inlet opening to the chamber is carried out using an additional auxiliary energy source on the heaters, it is equipped with the air distribution control panel. The method known from the PL138875 is how to prepare air for ventilation spray booth and the preparation device for ventilation painting cabin using low-temperature waste heat ventilation air from spray booth. The device for air preparation equipped with a filter, a fan, a heater and ventilation ducts characterized in that the duct which conducts the air from the preheater is connected by the air distributor with two ducts, one of which is connected to a rotary heater which output is located the outlet ducts connected to the exhaust manifold communicating with the bypass ducts. The exhaust manifold temperature sensor is located adjusting the position of the flap in a separatory funnel and the position of the control valve the amount of thermal heat flowing through the preheater, and the ventilation ducts, which the air flows are connected to the rotary heater. The method known from the US4422370 says that the device for the recovery of thermal energy from the air outlet of painting cabin for painting car chassis, where the heat from the relatively warm air outlet is transported to the cold supply air the cabin. The outbound air is mixed with water or another liquid solvent, and the liquid is separated in the separation chamber adjacent to the outlet ventilation cabin, and thus it circulates between the chamber and the heat exchanger through which the supply air flows. From Polish patent PL217481 the device is known for air exchange equipped with the spray booth, filters, fans, heat exchangers, dampers, ventilation ducts, that are characterized in that the air supply has two ventilations ducts: the heat recovery duct and the one without heat recovery. The exhaust duct is located inside the duct with the heat recovery. The supply air duct with the heat recovery is connected to the supply air duct without the heat recovery before the pre-filter at least one damper and it is equipped with at least one additional damper that waste heat is recovered from spray booth for air heating in the hall. The air for the spray booth can be downloaded via the supply duct with the heat recovery or the air handling duct without the heat recovery, it depends on the appropriate settings. The exhaust ducts between the diffuser and confusor includes a heat exchanger in the form of pipe duct connected to the bottom of the sieve diffuser and confusor. The cross sections channel of the heat exchanger may have different shapes, they are preferably round or square, such as to provide for cleaning of the inner walls of accumulated particulates overspray. The amount and pipe duct sections must be selected to ensure the flow of air mass necessary for the correct operation device without excessive resistance and obtain as the large heat exchange surface.
There are solutions of the heat pump installations for spray booth used for heat recovery or dehumidification. These solutions, however, do not involve in itself both these functions.

The spray booth with the heat recovery according to the invention containing the working space, ventilations ducts, filters, fans, heat exchangers, dampers, a housing, a heat source, characterized in that a device for heat exchange containing a compressor connected to two heat exchangers: a first located in the supply duct, and the second one located in the exhaust duct, and between that heat exchangers is an expansion valve. The compressor, expansion valve and two heat exchanger located in the painting cabin represent the heat pump. A heat transfer medium in the heat exchanger is refrigerant.
The compressor is preferably connected via electrovalves of the heat accumulator equipped with two heat exchangers: the lower to heat accumulation and the upper to take up heat. The refrigerant is the heat transfer medium. The heat accumulator can also have a third heat exchanger connected via pump to an alternative heat source, e.g. solar collector. The circuit of the third heat exchanger heat transfer medium is different than the refrigerant, for example water or glycol.
The compressor can also be connected via the electrovalves to a heat exchanger transferring the heat to another use. The refrigerant is the heat transfer medium. This heat can be used for room heating or domestic hot water.
The spray booth can also be equipped with the heat recovery installation connected to the duct supply air and the exhaust air. If the painting cabin is equipped with the heat recovery installation, the heat exchanger located in the exhaust duct may be placed before or behind the installation of heat recovery, and the most preferably it is when in the exhaust duct there are two heat exchangers, one before the installation, and another behind the installation. The heat recovery installation is, for example recuperator or rotary regenerator. The heat exchanger behind the heat recovery installation allows the heat recovery in painting mode because the temperature of air in the exhaust duct after the heat recovery by the heat recovery system is so high as to recover heat from the heat pump. The heat exchanger before heat recovery installation allows recovery of heat in the drying mode when the air is recirculated, it allows for dehumidification. Preferably, the heat exchanger is located in the supply duct directly above the ceiling filter and the heat exchanger in the exhaust duct is located behind the exhaust filter.
If the spray booth has a device for heat exchange containing a compressor connected to two heat exchangers: the first located in the supply duct and the second located in the exhaust duct and between the heat exchangers there is an expansion valve and when in the cabin there is also an installation for the heat recovery, then the heat exchanger in the supply duct is connected through a pump with the condenser and the heat exchanger in the exhaust duct is connected via the pump with the evaporator. Then we can reduce the amount of refrigerant in the circuit, limiting the amount of refrigerant only to the compressor, the condenser and the evaporator, all connected by the expansion valve. In the circuits between the heat exchanger and the evaporator and the condenser we can use other heat transfer medium, for example, water or glycol. If the spray booth is equipped with a heat accumulator, then the heat exchanger in the supply duct is connected via electrovalves to the condenser and evaporator. The lower heat exchanger in the heat accumulator is connected via electrovalves to the condenser. The heat exchanger in the exhaust duct and the upper heat exchanger in the heat accumulator are connected via electrovalves with the evaporator. If the heat accumulator is connected to the alternative heat source, the third heat exchanger in the heat accumulator is connected to the alternative heat source. In this version the condenser transfers heat to the heat accumulator and/or the heat exchanger transferring the heat to another use.
If the spray booth is equipped with an additional heat exchanger for heat transfer to another use, then a heat exchanger in the supply duct is connected via electrovalves to the condenser and evaporator, and a heat exchanger in the exhaust duct is connected to the evaporator. The condenser is connected via electrovalve with an additional heat exchanger. In this version, the heat can be used for heating supply air and or transferred to another use.

In another version of the spray booth it has the device for heat exchange containing the compressor connected to the evaporator and condenser between which there is an expansion valve and it has a heat accumulator provided with two heat exchangers: upper and lower. The condenser is connected via electrovalves with the lower heat exchanger of the heat accumulator, and the evaporator is connected to the heat exchanger placed in the supply duct or with the heat exchanger in the exhaust duct. The upper heat exchanger of the heat accumulator is connected via electrovalves with the heat exchanger located in the supply duct or with the evaporator. This solution allows for several modes of operation. In the simplest mode of the heat recovery system, the heat exchanger placed in the exhaust duct recovers heat from exhaust air and transfers it to the evaporator. The condenser whereas transfer heat to a heat exchanger located in the supply duct for heating the supply air. The heat from the condenser can be passed to heat accumulator through the lower heat exchanger. The heat from the condenser can be passed simultaneously to the heat exchangers in supply duct and in the heat accumulator, or selectively to one of them. Heat from the heat accumulator can be passed for heating the supply air without the condenser and the evaporator in a separate circulation heat transfer medium. This is accomplished by connecting the upper heat exchanger of the heat accumulator with the heat exchanger located in the supply duct through the flow pump. At that time the evaporator is connected to the heat exchanger in the exhaust duct, and the condenser is connected to the lower heat exchanger of the heat accumulator.

The above configuration also allows for cooling supply air. It is accomplished by connecting the evaporator with the heat exchanger in supply duct, and the condenser is connected to the lower heat exchanger in the heat accumulator. The heat from the cooling air is then accumulated.
The heat accumulator can have a third heat exchanger connected via the pump to an alternative heat source, e.g. solar collector.
The spray booth can be equipped with additional heat exchanger for heat transfer to other use. Then the condenser is connected through electrovalves to a heat exchanger transferring the heat to another use.
The spray booth can be equipped with the heat recovery system connected to the supply and exhaust ducts. The heat exchanger in the exhaust duct may be placed before the heat recovery installation or behind heat recovery installation, but most preferably it is like in the exhaust duct there are two heat exchangers, one before the installation, and another behind the heat recovery installation. The heat recovery installation is, for example a recuperator or a rotary regenerator. The heat exchanger behind the heat recovery installation allows to heat recovery in coating mode, because the temperature of the air in the exhaust duct after the recuperator heat recovery is high enough to recover heat by the heat pump. The heat exchanger before the heat recovery installation allows to heat recovery in the drying mode when the air is recirculated, it allows for dehumidification.
Preferably, the heat exchanger is located in supply duct directly above the ceiling filter and the heat exchanger in the exhaust duct is located behind the exhaust filter.

The invention allows for an accumulation of heat, the use of heat from alternative sources as well as heat transfer to the other use. The heat recovered with the exhaust air from the spray booth can be used to heat the fresh air, cooling air or space heating. It may be directed to the heat accumulator or the other alternative heat consumer. It enables cooperation with the other heat recovery installations, for example recuperators while maintaining above functionality. According to the invention, parallel operation of individual heat exchangers controllable their contribution to heat exchange is possible. Recovered or accumulated heat can be used in the further exploitation of the spray booth or for other purposes, eg. domestic hot water or space heating. This action allows for rational management of heat and lower power consumption.

The device according to the invention is shown in the examples and in the drawing, in which:
Figure 1 shows a cross-section of the spray booth with the heat exchange device, while the air is circulated to the painting mode;
Figure 2 shows a cross-section of the spray booth with the heat exchange device and the heat accumulator when the air is in cycle for drying mode.
Figure 3, 4, 5 and 6 shows diagrams of the refrigerant circuit for different operating modes described in Example 2;
Figure 7 shows a cross-section of the spray booth equipped with a device for heat exchange with the heat accumulator 5 provided with an additional heat exchanger coupled to alternative heat source. The air circulation in the spray booth is in the painting mode.
Figure 8 shows a cross-section of the cabin as in Fig 2 except that the heat recovery device is connected to the additional heat exchanger transferring the heat to another use. The air circulation is for the painting mode.
Figures 9 and 10 shows diagrams of the refrigerant circuit as described in Example 4;
Figure 11 shows a cross-section of the spray booth equipped with the heat recovery installation in the form of a cross recuperator and a device for heat exchange;
Figure 12 shows a schematic refrigerant circuit described in Example 5;
Figure 13 shows a cross section of the spray booth as in Fig. 11, except that the heat exchange device has additional heat exchanger transferring the heat to another use, and heat accumulator has an additional heat exchanger.
Figures 14, 15 and 16 shows diagrams of a refrigerant circuit as described in Example 6;
Figure 17 shows a diagram of the refrigerant and the glycol circuit as described in Example 7;
Figure 18 shows a diagram of the refrigerant and the glycol circuit as described in Example 8;
Figure 19 shows a diagram of the refrigerant and the glycol circuit as described in Example 10;
Figure 20 shows a diagram of the refrigerant circuit as described in Example 11;
Figures 21, 22, 23 and 24 shows a diagram of the refrigerant and the glycol circuit as described in Example 12;
Figures. 25 and 26 shows a diagram of the refrigerant and the glycol circuit as described in Example 13.

### EXAMPLE 1

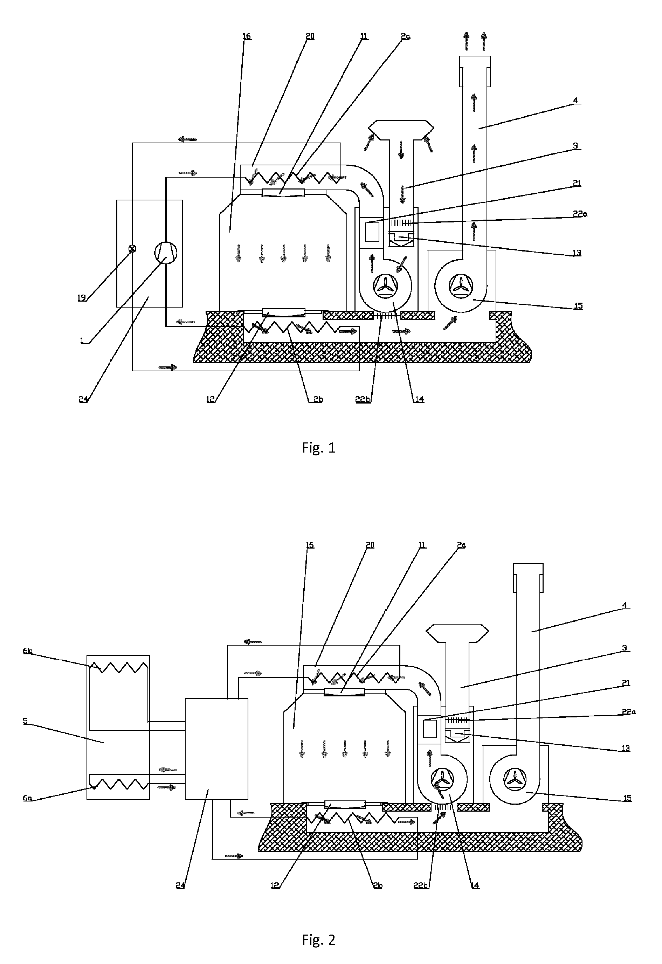

The spray booth shown in Figure 1 with air circulation in the painting mode contains working space 16, the air supply duct 3, the air exhaust duct 4 and burner 21. The supply duct 3 and the exhaust duct 4 are equipped with fans: the supply fan 14, the exhaust fun 15 and filters: the preliminary 13, the ceiling 11 and the exhaust filter 12. The spray booth is equipped with a device for heat exchange which includes a compressor 1, and two heat exchangers: 2a placed in the supply duct 3 and 2b placed in the exhaust duct 4.The expansion valve 19 is located between the heat exchangers 2a and 2b. The heat exchanger 2a is located directly above the ceiling filter 11, and the heat exchanger 2b is located under the exhaust filter 12. The air is taken in through the supply duct 3 and further through the preliminary filter 13 pressed by supply fan 14, heated by the heat exchanger 2a and pressed into the space above the ceiling filter 20 (plenum) of the spray booth. Next it is blown into the working space 16 of the spray booth through the ceiling filter 11. The air contaminated by overspray is drawn from the cabin through the exhaust filter 12, then from the exhaust air heat is recovered through the heat exchanger 2b. Subsequently, the air is discharged into the atmosphere through the exhaust fan 15 and exhaust duct 4.

During the operation of the spray booth in the drying mode the air is in recirculation. The air recirculation is carried out by switching off the exhaust fan 15, opening the damper 22b and closing the damper 22a. Supply fan 14 press air to the working space 16 of the spray booth via the heat exchanger 2a and the ceiling filter 11. Then the air is drawn through the exhaust filter 12, the heat exchanger 2b and through the open damper 22b returns to supply fan 14. The unclosed damper 22a provides draw fresh air from the supply duct 3 and the excess air is discharged through the exhaust duct 4. The compressor 1 pressed refrigerant to heat exchanger 2a where it gives heat supplied air to the working space 16. Then, through the expansion valve 19 it goes to the heat exchanger 2b where it absorbs heat from exhaust air from the working space 16. The refrigerant is sucked off by the compressor 1. The compressor 1 and the expansion valve 19 constitute module 24.

### EXAMPLE 2

The spray booth shown in Figure 2 as in the example 1, except that the circulation of air in the cabin is shown in the drying mode, and the compressor 1 is connected via the electrovalves with the heat accumulator 5 provided with two heat exchangers 6a and 6b used for heat accumulation and collection. Module 24 in this version of the cabin contains a compressor 1, the expansion valves 19a and 19b, three-way valves 23 and 23a and electrovalves.

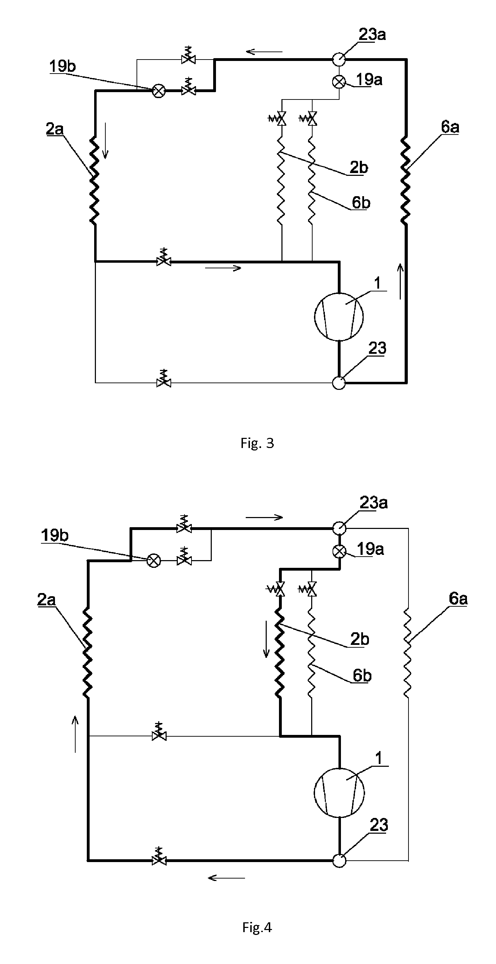

The refrigerant circuit may be provided with a variety of heat exchangers by the settings of elctrovalves and three-way valves 23 and 23a. Figure 3 shows the refrigerant circuit in painting mode with fresh air cooling and heat accumulation. The compressor 1 pressed refrigerant to the heat exchanger 6a located in the heat accumulator 5, where the refrigerant gives up heat to the heat accumulator 5. Then, through the expansion valve 19b of the refrigerant goes to the heat exchanger 2a, where it receives the heat from the fresh air and return to the compressor 1.

Figure 4 shows the refrigerant circuit in the operation of painting or drying mode, wherein air pressed into the working space 16 is heated by the refrigerant in the heat exchanger 2a. The refrigerant through the expansion valve 19a goes to the heat exchanger 2b, where it receives the heat from the exhaust air of the working space 16.

The refrigerant is sucked from the heat exchanger 2b by the compressor 1. In addition, in the drying mode, the air cooled by the heat exchanger 2b is also drained giving additional functionality.

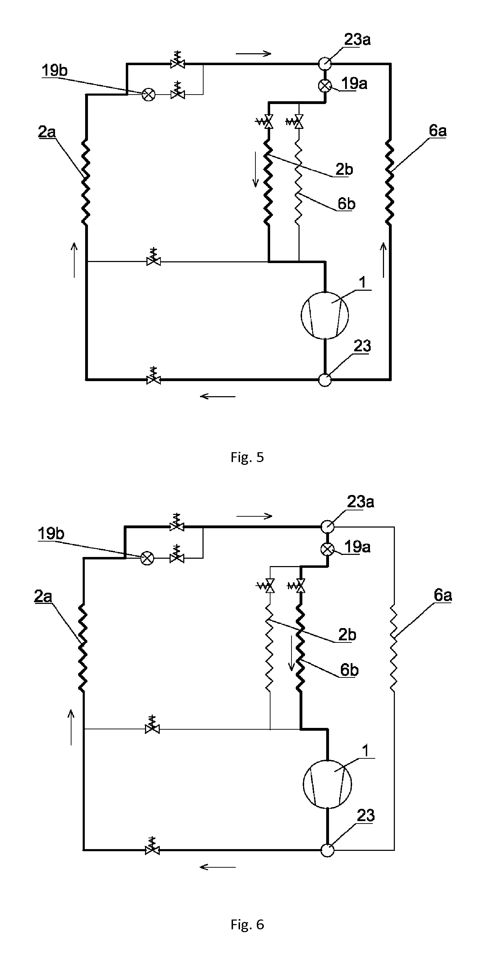

By appropriate changes to the settings of elctrovalves and three-way valves 23 and 23a, the heat can be given away at the same time to heat the supply air and accumulation or just to heat or just to accumulate. Figure 5 illustrates the operation of the parallel heat exchangers 2a and 6a, where the heat is used to heat the air and accumulated.

Changes to the settings of elctrovalves also allows change the heat source. The heat can be downloaded from the heat accumulator 5 via a heat exchanger 6b. The circulation for this operating mode is shown in figure 6.

### EXAMPLE 3

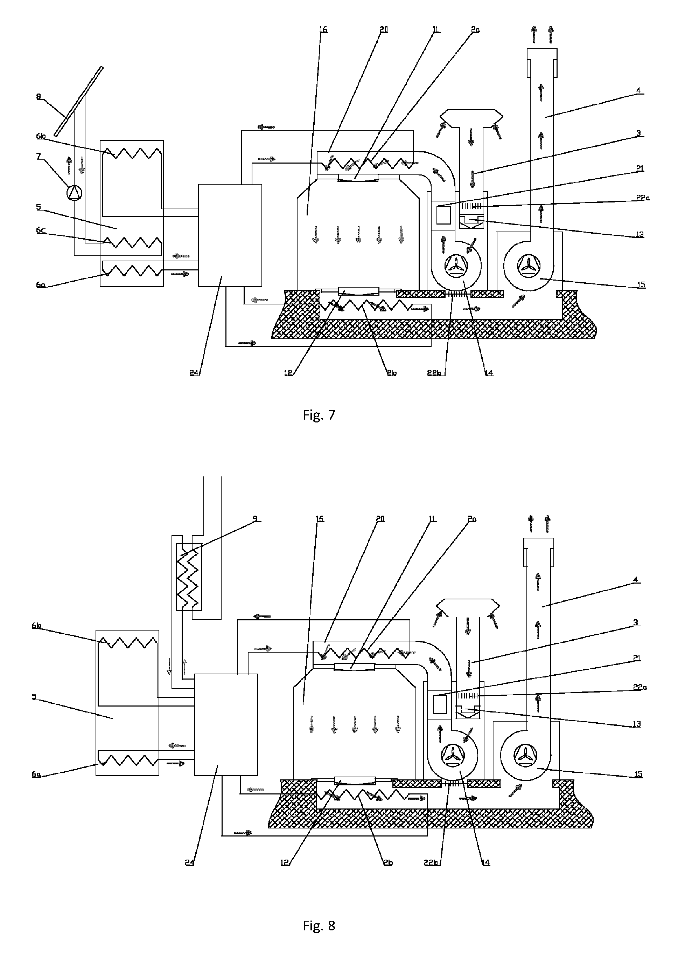

The spray booth shown in Figure 7, as in the second example, except that the circulation of air in the cabin is shown in the painting mode, and the heat accumulator 5 is equipped with a third heat exchanger 6c connected through a flow pump 7 with the solar collector 8. The heat from the solar collector 8 is accumulated in the heat accumulator 5 via the heat exchanger 6c. The heat transfer medium is glycol, pumped by flow pump 7. The circuit with solar collector is independent system since refrigerant circuit. These circuits can be operated independently.

### EXAMPLE 4

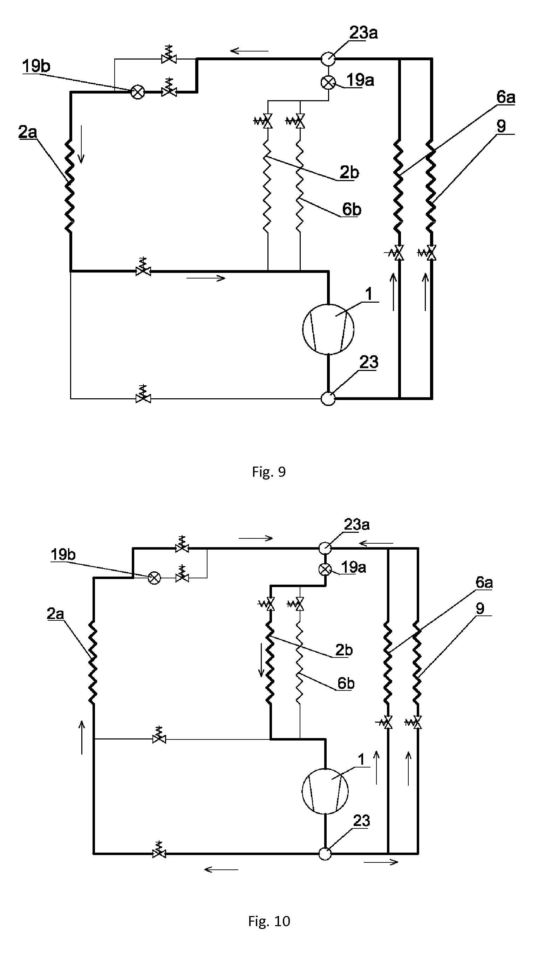

The spray booth shown in Figure 8 as in the example 2, except that the circulation of air in the cabin is shown in the painting mode, and the compressor 1 is connected via the electrovalves with the plate heat exchanger 9 transferring the heat to another use. The heat exchanger 9 can be operated instead of the heat exchanger 6a or in parallel with it. Figure 9 shows a refrigerant circuit in painting mode with fresh air cooling and heat accumulation and plate heat exchanger 9 operates in parallel with the heat exchanger 6a. It is the painting mode with the cooling fresh air, where the heat is accumulated both as given away to another use.

Figure 10 shows the painting or drying operation mode with the heat recovery. The heat is used both for heating air in the spray booth through the heat exchanger 2a, and the accumulated the heat exchanger 6a, and transferred to another use by the heat exchanger 9. In this operating mode heat exchangers 2a, 6a and 9 can also work alone or in selective pairs. This is accomplished by appropriate closing and opening electrovalves and three-way valves.

### EXAMPLE 5

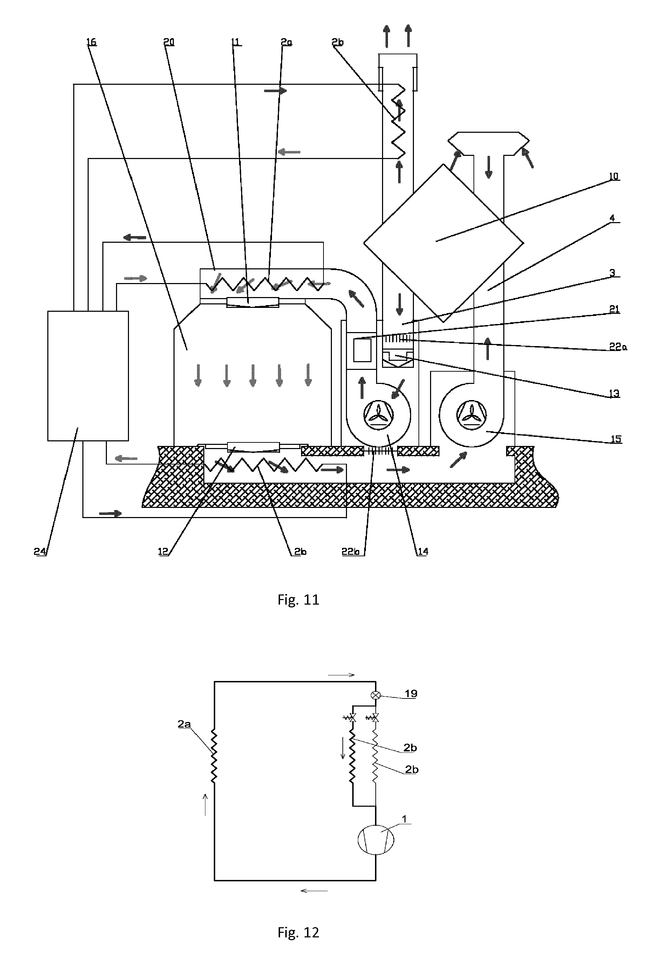

The spray booth shown in Figure 11, as in the first example except that has a heat recovery system 10 in the form of a recuperator cross-connected to the supply duct 3 and the exhaust duct 4. The module 24 comprise the compressor 1, the expansion valve 19 and the two electrovalves. The exhaust duct 4 behind the exhaust filter 12 is located behind the first heat exchanger 2b, and behind the heat recovery system 10 the second heat exchanger 2b is located. The heat exchangers 2b are connected in parallel with each other and are located between expansion valve 19 and the compressor 1, and between the expansion valve 19 and each of the heat exchangers 2b the electrovalve is located. The refrigerant circuit is dependent on the operating mode of the spray booth. Figure 12 shows a flow of a refrigerant in the drying mode, the air is then recirculated. The refrigerant circuit is the same as in Example 1.

### EXAMPLE 6

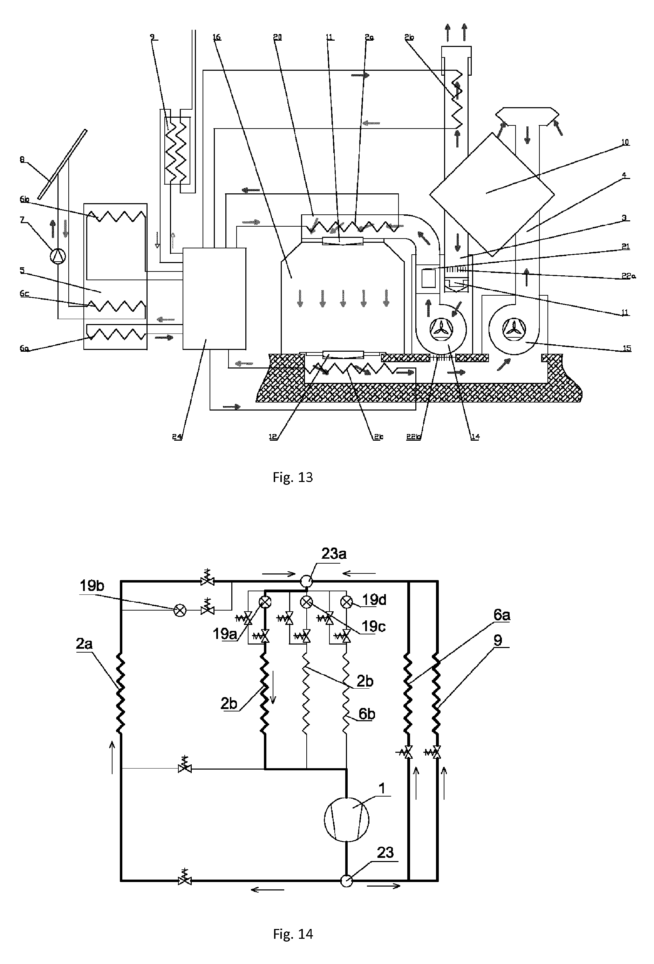

The spray booth shown in Figure 13, as in the first example except that the module 24 includes a compressor 1, the expansion valves 19, 19a, 19b, 19c and three-way valves 23 and 23a and the electrovalves. The compressor 1 is connected via the electrovalves of the heat accumulator 5 provided with two heat exchangers 6a and 6b to accumulation and collection of heat. The heat accumulator 5 is equipped with a third heat exchanger 6c connected through a flow pump 7 with the solar collector 8. The heat from the solar collector 8 is accumulated in the heat accumulator 5 via the heat exchanger 6c. Glycol is the heat carrier, pumped by the flow pump 7. The compressor 1 is connected via electrovalves of the plate heat exchanger 9 transferring the heat to another use. The spray booth is equipped with the installation for heat recovery 10 in the form of the recuperator cross-connected with the supply duct 3 and the exhaust duct 4. The exhaust duct 4 is located behind the installation of a heat recovery 10, the second heat exchanger 2b connected via electrovalves with the compressor 1. The heat exchangers 2b in the exhaust duct 4 and the heat exchanger 6b in the heat accumulator 5 are equipped with expansion valves 19a, 19c, and 19d.

Figure 14 shows refrigerant circuit of drying mode with the heat recovery, using the heat to heat the air being recirculated and at the same time in the heat accumulation and the heat transfer to another use. The compressor 1 presses the refrigerant working in parallel with the heat exchangers 2a, 6a and 9. The heat exchanger 2a heats the air which is under recirculation, the heat exchanger 6a transfers the heat to the heat accumulator 5, and the heat exchanger 9 transfers the heat to another use. Then of heat exchangers 2a, 6a and 9, the refrigerant through the expansion valve 19a goes to the heat exchanger 2b, wherein the heat is received from air in the recirculation. Cooling air through the heat exchanger 2b also causes air dehumidification. The refrigerant is sucked by the compressor 1 from the heat exchanger 2b and again pumped into heat exchangers 2a, 6a, 9.

During the painting mode the difference in the refrigerant circuit is to change a heat exchanger receiving heat from the air. In this painting mode the heat receives the second heat exchanger 2b placed in the exhaust duct behind the cross recuperator 10, and the drying mode, the first heat exchanger 2b is placed before the cross recuperator 10.

In both modes the heat exchangers 2a, 6 and 9 do not have to work in the same time, they can be operated selectively either or may work in any pairs. This gives the possibility to transfer the heat recovered during the operation spray booth to other uses and / or the heat accumulation and / or the heating air.

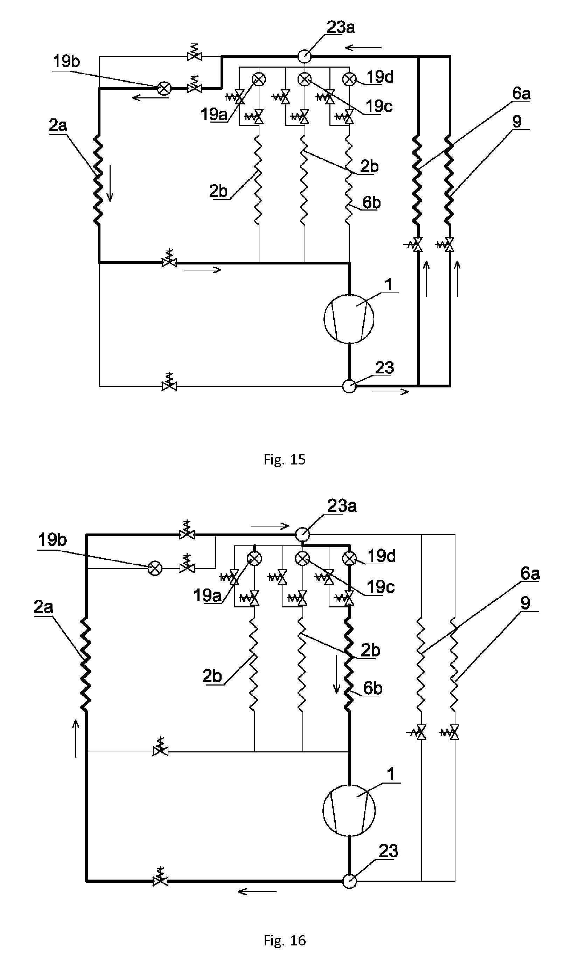

Figure 15 shows the refrigerant circuit for the painting mode with air cooling, heat accumulation and heat transfer to other use. The compressor 1 presses refrigerant to the heat exchangers 6a and 9 and the heat exchanger 6a transfers the heat to the heat accumulator 5, and the heat exchanger 9 transfers the heat to another use. Then, through the expansion valve 19b of the refrigerant it goes to the heat exchanger 2a and receives the heat from the supply air into the working chamber 16. Then, the compressor 1 sucks the refrigerant of the heat exchanger 2a and again presses to the heat exchangers 6a and 9. The heat exchangers 6a and 9 do not have to work in the same time, depending on requirements, they can also be operated selectively.

Figure 16 shows the refrigerant circuit in the painting mode or in the drying mode with heated air from the heat accumulator 5. The compressor 1 presses the refrigerant to the heat exchanger 2a, where the refrigerant heats the air. Then, through the expansion valve 19d, the refrigerant goes to the heat exchanger 6b arranged in the heat accumulator 5. The refrigerant receives the heat from the heat accumulator 5 and is sucked by the compressor 1 and again pumped into the heat exchanger 2a. In parallel with the exchanger 2a or instead the heat exchanger 9 may operate transferring the heat to another use.

### EXAMPLE 7

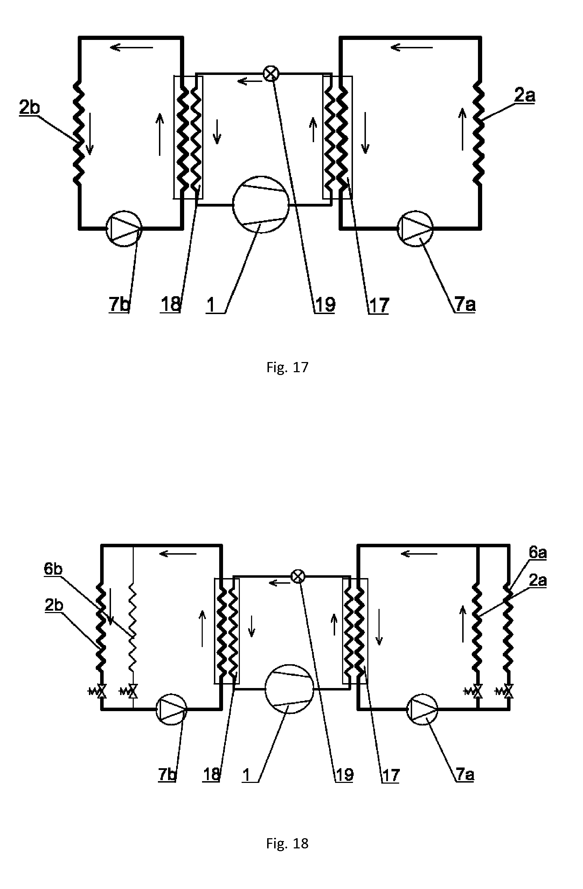

The spray booth as in the first example, except that the module 24 includes in this version the compressor 1, the evaporator 18, the condenser 17, the expansion valve 19 and the flow pumps 7a and 7b. The compressor 1 is connected to a condenser 17 and the evaporator 18. Between the condenser 17 and the evaporator 18 there is an expansion valve 19. This circuit can operate as a heat pump. The heat exchanger 2b is connected to the evaporator 18. Through the glycol circuit the evaporator 18 recovers heat from heat exchanger 2b. The heat exchanger 2a is connected to the condenser 17, which transmits through the glycol heat thereto. Glycol is pressed by the flow pump 7a and 7b. The heat exchanger 2a heats the air pressed to the working space 16. The refrigerant circuit and the glycol circuit is shown in figure 17.

### EXAMPLE 8

The spray booth as in example 7, except that the module 24 includes the compressor 1, the evaporator 18, the condenser 17, the expansion valve 19, the flow pumps 7a and 7b, as well as the electrovalves, and the cabin is equipped with the heat accumulator 5 containing the heat exchangers 6a and 6b. The refrigerant and glycol circuit for operating in drying or painting mode with the heat recovery and heat accumulation is illustrated in figure 18. The heat exchangers 2a and 6a can work in parallel or individually. In this version, supply air to the working space 16 can be heated from the heat accumulator 5. The heat exchanger 6b receives the heat from the heat accumulator 5 and through the glycol pressed by the flow pump 7b, it transfers the heat to the evaporator 18. The condenser 17 transfers the heat through glycol pressed by the flow pump 7a to a heat exchanger 2a. The heat exchanger 2a heats the air supplied to the working space 16.

### EXAMPLE 9

The spray booth as in example 8, except that in the heat accumulator 5 is an additional heat exchanger 6c to an alternative heat source. The solar collector 8 with the flow pump 7 and the heat exchanger 6 provides a separate circuit that can operate independently of the refrigerant and glycol circuit. The refrigerant and the glycol circuit is the same as in example 8.

### EXAMPLE 10

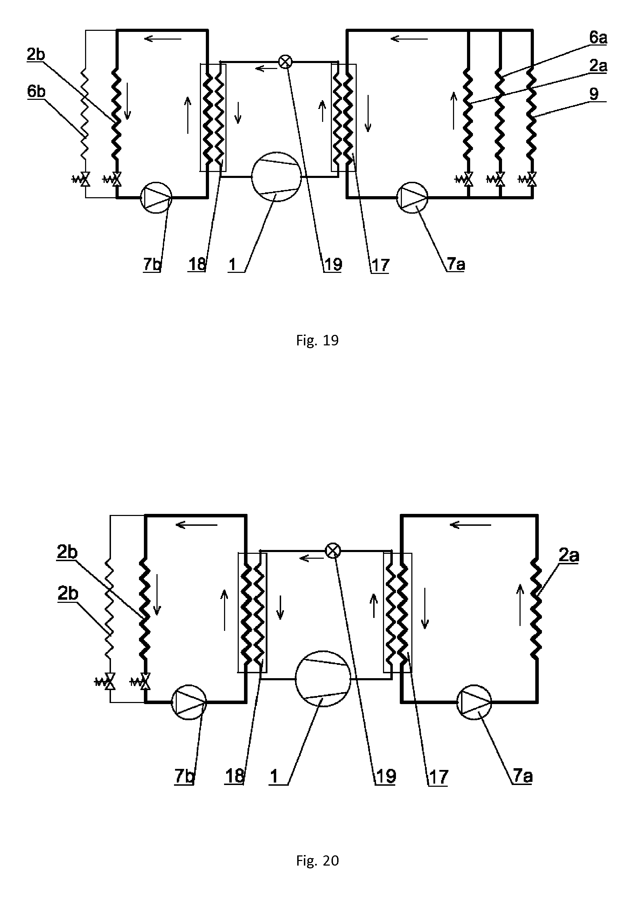

The spray booth as in example 8, except that it has a heat exchanger 9 for heat transfer to another use. Figure 19 shows the refrigerant and glycol circuit for painting or drying mode with the heat recovery from exhaust air of the working space 16 and the simultaneous heating of air, the heat accumulation and the heat transfer to some other use. The heat exchanger 2b absorbs heat from the air exhausted from the working space 16 and through the glycol forwards heat to the evaporator 18. The condenser 17 heats glycol, pumped by the flow pump 7a to the heat exchangers 2a, 6a and 9. Heat exchanger 2a heats the air supplied to the working space 16, heat exchanger 6a transfers the heat to the heat accumulator 5, the heat exchanger 9 transfers the heat to another use. Heat exchangers 2a, 6a and 9 depending on the needs can be operated all together, individually or in selective pairs. In case of need the use of heat from the heat accumulator 5 may be on the side of the evaporator 18 to switch the heat exchangers so that heat exchanger 6b works, and the heat exchanger 2b does not operate.

### EXAMPLE 11

The spray booth as in example 7, except that the module 24 includes a compressor 1, the evaporator 18, the condenser 17, the expansion valve 19, the flow pump 7a and 7b, as well as electrovalves, and the spray booth has the installation for the heat recovery 10 in the form of a cross recuperator. The cross recuperator 10 is connected to the supply duct 3 and the exhaust duct 4. The exhaust duct 4 is located behind the cross recuperator 10, the second heat exchanger 2b is connected to the evaporator 18.

The heat exchangers 2b operate alternately depending on the operating mode of the spray booth. While the painting mode is working the second heat exchanger 2b located behind the cross recuperator 10 receives heat from the exhaust air of the working space 16. While the drying mode is working the first heat exchanger 2b before the cross recuperator 10 which receives the heat from the recirculation air. Figure 20 shows the refrigerant and glycol circuit.

### EXAMPLE 12

The spray booth contains the working space 16, the supply duct 3, the exhaust duct 4. The supply duct 3 and the exhaust duct 4 are equipped with a fans: the supply fan 14 and the exhaust fan 15 and the filters: the preliminary filter 13, the ceiling filter 11 and the exhaust filter 12. Module 24 includes the compressor 1, the evaporator 18, the condenser 17, the expansion valve 19, the flow pumps 7a, 7b and 7c, and the electrovalves. The spray booth is equipped with a device to heat exchange containing compressor 1 connected to the evaporator 18 and the condenser 17 between which there is an expansion valve 19 and the heat accumulator 5 which is equipped with two heat exchangers lower 6a and upper 6b. The condenser 17 is connected by the electrovalves to the lower heat exchanger 6a and the heat exchanger 2a and the evaporator 18 is connected by the electrovalves with heat exchanger 2a which is located in the supply duct 3 and the heat exchanger 2b which is located in the exhaust duct 4 and the upper heat exchanger 6b. The upper heat exchanger 6b is connected by the electrovalves to the heat exchanger 2a. Between the upper heat exchanger 6b and the heat exchanger 2a placed is the flow pump 7c with the electrovalves.

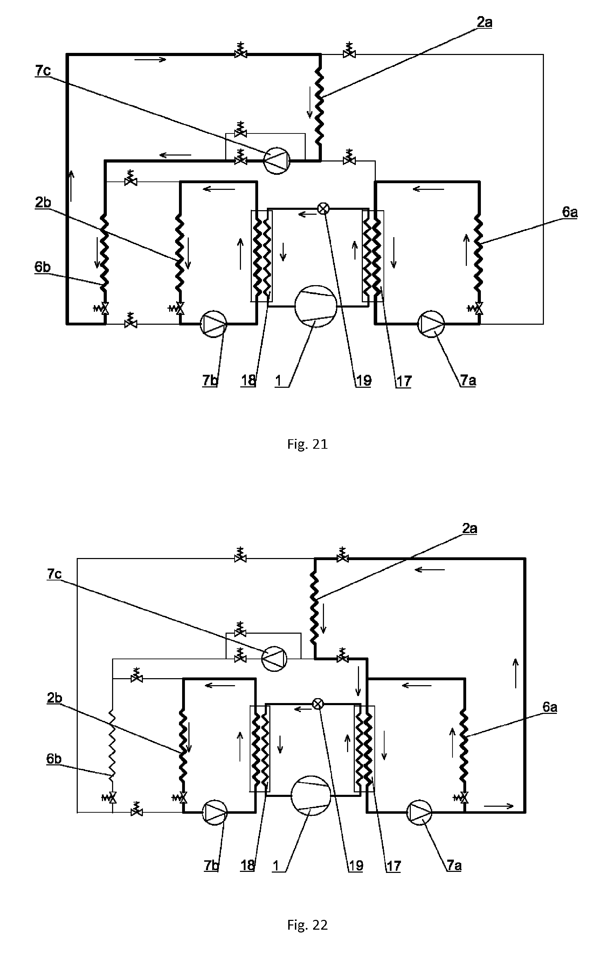

Figure 21 shows the refrigerant and glycol circuit in the painting or drying mode, where the air is heated by the heat exchanger 2a without the participation of condenser 17 and the evaporator 18. The heat exchangers 2a and 6b and the flow pump 7c make up separate circuit to heat the air. The heat exchanger 2b recovers the heat from the air in the exhaust duct 4 and transfers the heat to the evaporator 18 and the condenser 17 transfers heat to the heat accumulator 5 through the lower heat exchanger 6a. Independent air heating circuit from the heat accumulator 5 and the heat recovery circuit through the evaporator 18 and the condenser 17 can be operated simultaneously or selectively depending on the need.

Figure 22 shows the operation in the painting or drying mode with the heat recovery, air heating and heat accumulation. The heat exchanger 2b extracts heat from the air in the exhaust duct 4 and by the glycol transmits the heat to the evaporator 18. From the condenser 17 the heat is transmitted through the glycol to the heat accumulator 5 through the lower heat exchanger 6a and to heat the supply air through the heat exchanger 2a. Depending on the needs the heat exchangers 2a and 6a can be operated simultaneously or individually.

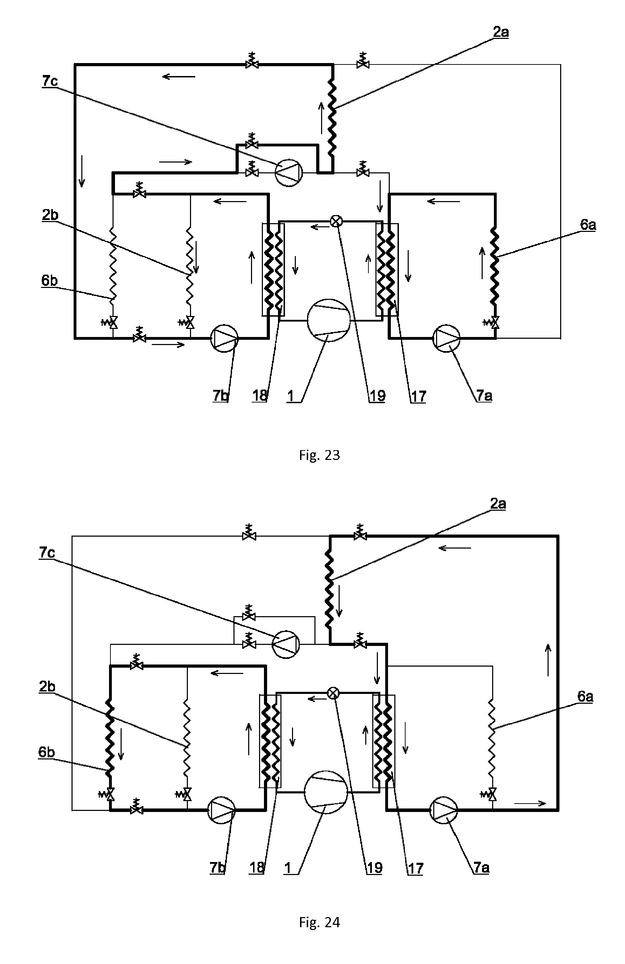

Figure 23 shows the glycol circuit when in the painting mode supply air into the working space 16 is cooled and the heat is transmitted to the heat accumulator 5. The heat exchanger 2a receives the heat from the air and through the glycol transfers heat to the evaporator 18.Through the glycol the condenser 17 transfers the heat to the heat exchanger 6a in the heat accumulator 5. The accumulated heat in the heat accumulator 5 can later be used to heat the air in the painting or drying mode. This can be accomplished in a separate circuit without the participation of the condenser 17 and evaporator 18, as shown in Figure 21 or involving the condenser 17 and evaporator 18, as illustrated in Figure 24. Glycol extracts the heat from the heat accumulator 5 by means of the heat exchanger 6b and further it transfers the heat to the evaporator 18. The condenser 17 heats the glycol which goes to the heat exchanger 2a and heats the air supply into the working space 16.

### EXAMPLE 13

The spray booth as in the example 12, except that the heat accumulator 5 is equipped with the third heat exchanger 6c connected through a flow pump 7 with the solar collector 8. The heat from the solar collector 8 is accumulated in the heat accumulator 5 via the heat exchanger 6c, the heating medium is glycol pumped by the flow pump 7. The condenser 17 is additionally connected by the electrovalves with the plate heat exchanger 9 transferring the heat to another use. The spray booth is equipped with the installation for heat recovery 10 in the form of the cross recuperator connected with the supply duct 3 and the exhaust duct 4. The exhaust duct 4 is located behind the cross recuperator 10 and the heat exchanger 2b is connected by the valves to the condenser 17.

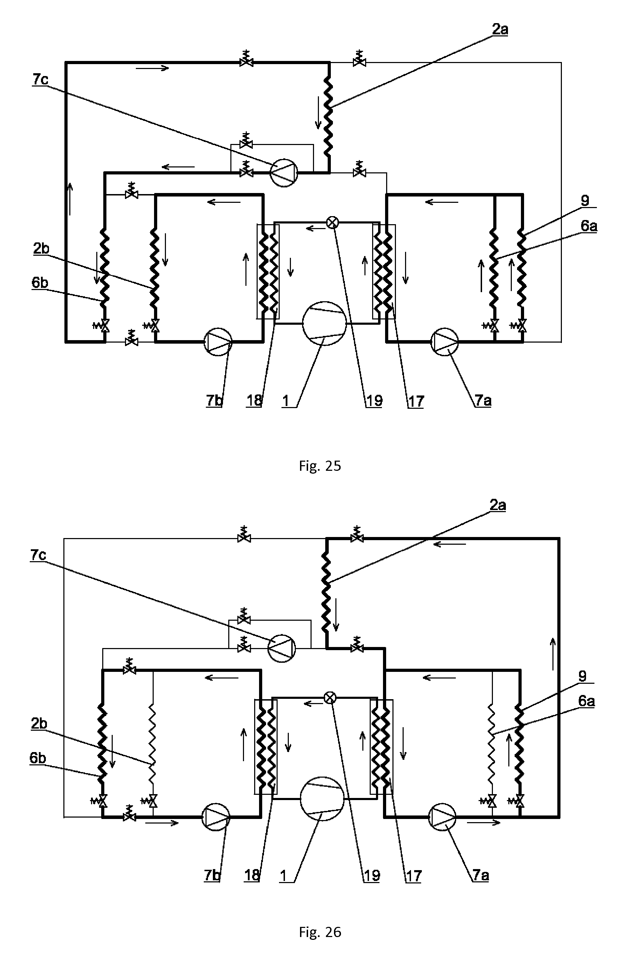

Figure 25 shows the refrigerant and glycol circuit when in the painting mode the air pressed into the working space 16 is heated directly with the heat accumulator 5 without the participation of the evaporator 18 and the condenser 17. The heat exchanger 6b receives heat from the heat accumulator 5, and by the glycol pressed by the flow pump 7c transfers heat in to the exchanger 2a which heats the air pressed into the working space 16. At that time, heat exchanger 2b placed in the exhaust duct 4 behind the recuperator 10 receives the heat from the exhaust air and by the glycol passes it to the evaporator 18. The condenser 17 transfers the heat by the glycol to the heat exchangers 6a and 9. The heat exchanger 6a transfers the heat to the heat accumulator 5, and the heat exchanger 9 transfers the heat to another use. The heat exchangers 6a and 9 can be operated selectively depending on requirements.

Figure 26 shows a refrigerant and glycol circuit when in painting or drying mode the supply air to the working space 16 is heated with the heat accumulator 5 via the evaporator 18 and the condenser 17 with simultaneous transferring heat to some other use. The heat exchanger 6b extracts the heat from the heat accumulator 5 and by the glycol it passes heat to the evaporator 18. The condenser 17 transfers the heat by the glycol to the heat exchangers 2a and 9. The heat exchanger 2a heats the air pressed to the working space 16 while the heat exchanger 9 transfers the heat for another use. The heat exchangers 2a and 9 may work simultaneously or selectively. Where only the heat exchanger 9 works, the heat with a the heat accumulator 5 can be transmitted to other uses without operating the spray booth.

## Claims

1. The spray booth whit the heat recovery system containing working space, ventilation ducts, filters, fans, heat exchangers, dampers, a ducting, a heat source, **characterized in that** it comprises of a device for heat exchange containing the compressor (1) connected to two heat exchangers: (2a) located in the supply duct (3) and (2b) located in the exhaust duct (4), and between the heat exchangers (2a) and (2b) is an expansion valve (19).

2. The spray booth according to claim, 1 **characterized in that** the compressor (1) is connected through the electrovalves with the heat accumulator (5) equipped with two heat exchangers, bottom (6a) and upper (6b).

3. The spray booth according to claim 2, **characterized in that** the heat accumulator (5) has the third heat exchanger (6c) connected through the flow pump (7) to the alternative heat source (8).

4. The spray booth of claim 1 or 2 or 3, **characterized in that** the compressor (1) is connected through the electrovalves (9) to a heat exchanger transferring the heat to another use.

5. The spray booth of claim 1 or 2 or 3 or 4, **characterized in that** it has of an installation of the heat recovery (10) connected to the supply duct (3) and exhaust duct (4), wherein the heat exchanger (2b) located in the exhaust duct (4) before the installation of the heat recovery (10) and/or behind the installation of the heat recovery (10).

6. The spray booth according to claim 5, **characterized in that** the installation of the heat recovery (10) constitutes the recuperator, the rotary regenerator.

7. The spray booth of claim 1 or 5, **characterized in that** the heat exchanger (2a) is connected via the pump (7a) to the condenser (17) and the heat exchanger (2b) is connected via the pump (7b) with the evaporator is (18).

8. The spray booth according to claim 2 or 3, **characterized in that** the heat exchanger (2a) is connected through the electrovalves with the condenser (17) and the evaporator (18), and heat exchanger (6a) is connected through the electrovalves to the condenser (17), and the heat exchangers (2b) and (6b) are connected with the evaporator (18).

9. The spray booth according to claim 4, **characterized in that** the heat exchanger (2a) is connected through the electrovalves with the condenser (17) and the evaporator (18) and the heat exchanger (2b) is connected to the evaporator (18), and the condenser (17) is connected via the electro valve to the heat exchanger (9).

10. The spray booth with heat recovery system containing a working space, ventilation ducts, filters, fans, heat exchangers, dampers, a housing, a heat source, **characterized in that** it has a device for heat exchange containing a compressor (1) connected to the evaporator (18) and condenser (17), between which there is an expansion valve (19) and it has a heat accumulator (5) equipped with two heat exchangers, bottom heat exchanger (6a) and upper heat exchanger( 6b), wherein the condenser (17) is connected by the electrovalves with the bottom heat exchanger (6a) and with the heat exchanger (2a), and the evaporator (18) is connected through the electrovalves with heat exchanger (2a) located in the supply duct (3) and with the heat exchanger (2b) located in the exhaust duct (4) and with the upper heat exchanger (6b), wherein an upper heat exchanger (6b) is connected by the electrovalves with heat exchanger (2a), wherein between the upper heat exchanger (6b) and the heat exchanger (2a) a flow pump (7c) with the electrovalves is located.

11. The spray booth according to claim 10, **characterized in that** the heat accumulator (5) has the third heat exchanger (6c) connected through the pump (7) with the alternative heat source (8).

12. The spray booth according to claim 10 or 11, **characterized in that** the condenser (17) is connected by the electrovalves with heat exchanger (9) transferring the heat to another use.

13. The spray booth according to claim 10 or 11 or 12, **characterized in that** it has an installation of the heat recovery (10) connected to the supply duct (3) and exhaust duct (4), wherein the heat exchanger (2b) is located in the exhaust duct (4) before and/or behind the installation of the heat recovery (10).

14. The spray booth according to claim 13, **characterized in that** it has an installation of the heat recovery (10) constitutes the recuperator, the rotary regenerator.
